# FASCICULE DE BREVET EUROPEEN

(11) **EP 0 716 219 B1**
(45) Date de publication et mention de la délivrance du brevet: **08.03.2000**
(21) Numéro de dépôt: 95402741.3
(22) Date de dépôt: 06.12.1995
(51) Int. Cl.: F01D 25/24

(54) **Distributeur monobloc sectorisé d'un stator de turbine de turbomachine**
Aus Segmenten aufgebauter Leitkranz für eine Turbomaschine
Segmented stator ring for a turbomachine

(30) Priorité: 07.12.1994 FR 9414691
(43) Date de publication de la demande: 12.06.1996
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Benoist, Josette, F-77350 Le Mee S/Seine (FR); Jolu, Jérome Emmanuel René, F-77310 Pringy (FR); Martyez, Paul, F-91230 Montgeron (FR); Taillant, Jean-Claude Christian, 77000 Vaux Le Penil (FR)

(56) Documents cités:
- EP-A- 0 192 557
- EP-A- 0 526 058
- CH-A- 482 915
- DE-C- 518 106
- FR-A- 2 624 556
- GB-A- 216 737
- US-A- 4 126 405
- US-A- 5 141 393

## Description

### Domaine de l'invention

L'invention concerne la turbine haute pression d'une turbomachine telle que les turboréacteurs utilisés sur un avion. Elle concerne plus précisément la structure monobloc sectorisée du distributeur du stator de la turbine haute pression.

### Art antérieur et problème posé

Les turbomachines actuelles ou futures, telles que les turboréacteurs qui équipent les avions civils et militaires doivent être performantes, mais aussi plus légères et ne nécessitant qu'un entretien facile, plus espacé et donc moins coûteux. La considération de ces objectifs oblige les avionneurs à reconsidérer la définition de certaines parties, voire toutes les parties, de ces turbomachines.

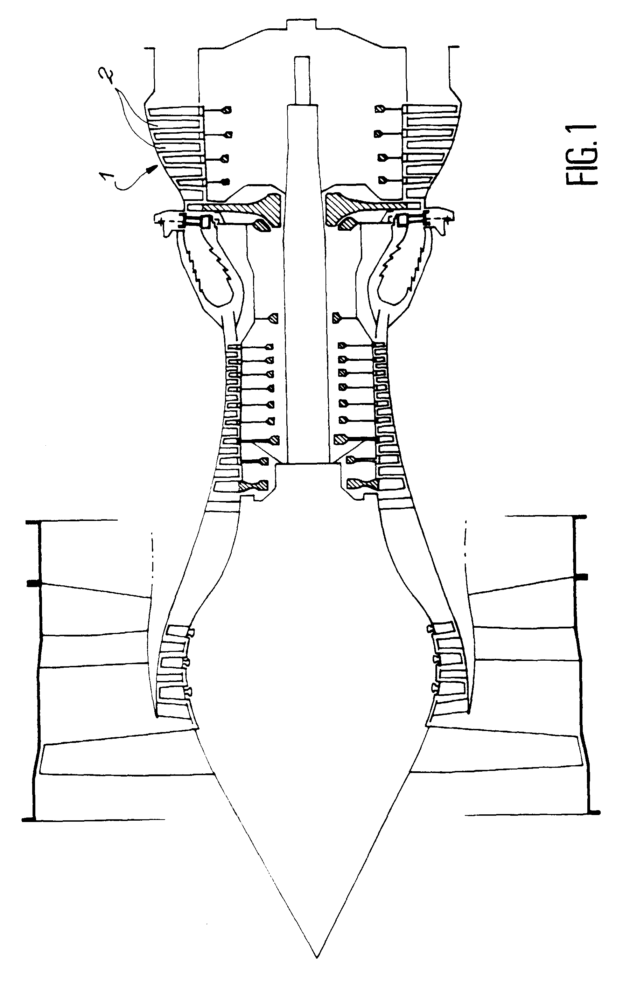

En référence à la figure 1, au niveau de la turbine haute pression 1 de la tubomachine, le stator est réalisé, dans la majorité des cas par des secteurs composés de plusieurs aubes 2 liées par des plates-formes. Il est ainsi fréquent de rencontrer des secteurs composés de deux aubes 2 liées par une plate-forme inférieure en une plate-forme extérieure. Ces secteurs sont ensuites fixés sur des viroles circulaires.

Il est évident que les zones de rapprochement et de liaison créent des imperfections géométriques dans ce montage qui perturbent l'écoulement de l'air à travers la turbine haute pression. Ces imperfections permettent l'existence de fuites qui sont toujours néfastes au rendement de la turbomachine.

L'invention a pour but de remédier à ces inconvénients.

Par ailleurs, par le brevet américain US-A-4 126 405, on connaît un tel montage segmenté d'un distributeur de turbines. Les secteurs sont bloqués en rotation par des ergots repérés 46 sur la figure 1 de ce brevet US. L'étanchéité entre chaque secteur est assurée par des languettes qui viennent se positionner dans des rainures des plates-formes.

A cet effet, l'invention se rapporte à un distributeur de stator de turbine de turbomachine qui comprend, comme il est connu par CH-B-482915:
- des aubes associées entre elles par secteurs, par exemple par deux ;
- des plates-formes intérieures sur chacune desquelles sont fixées deux aubes par une première extrémité ;
- des plates-formes extérieures sur chaque desquelles sont fixées les deux mêmes aubes par leurs deux autres extrémités ; et
- des moyens de maintien des secteurs par rapport à un carter du stator, notamment des moyens de fixation radiale et des moyens de fixation axiale.

En outre, les moyens de fixation radiale du distributeur sont souples et permettent une dilatation radiale, tout en conférant un caractère monobloc au distributeur.

On équipe de préférence le distributeur de moyens d'étanchéité constitué d'au moins deux joints plats placés en amont des deux plates-formes intérieure et extérieure.

En outre, les moyens de fixation radiale souple du distributeur comprennent pour chaque secteur, comme il est connu par EP-A-0 192 557:
- une première demi-chape placée sur la surface extérieure de chacune des plates-formes extérieures ;
- une deuxième demi-chape montée fixe par rapport au carter du stator ; et
- une biellette montée pivotante dans chaque demi-chape par une première extrémité et montée pivotante par rapport au carter du stator par une deuxième extrémité.

Selon l'invention, la première demi-chape est constituée de deux anneaux solidaires chacun d'un secteur différent, mais adjacents l'un par rapport à l'autre, de manière à assurer le maintien de chaque secteur les uns par rapport aux autres.

### Liste des figures

L'invention et ses différentes caractéristiques techniques seront mieux comprises à la lecture de la description suivante qui est accompagnée de plusieurs figures représentant respectivement :
- figure 1, en coupe, un turboréacteur civil utilisant un distributeur selon l'invention ;
- figure 2, en vue de face, une partie du distributeur dans une réalisation selon l'invention ;
- figure 3, en coupe, un détail de réalisation du distributeur de la figure 2 ; et
- figure 4, une vue de dessus et partielle du distributeur de la figure 2.

### Description détaillée d'une réalisation de l'invention

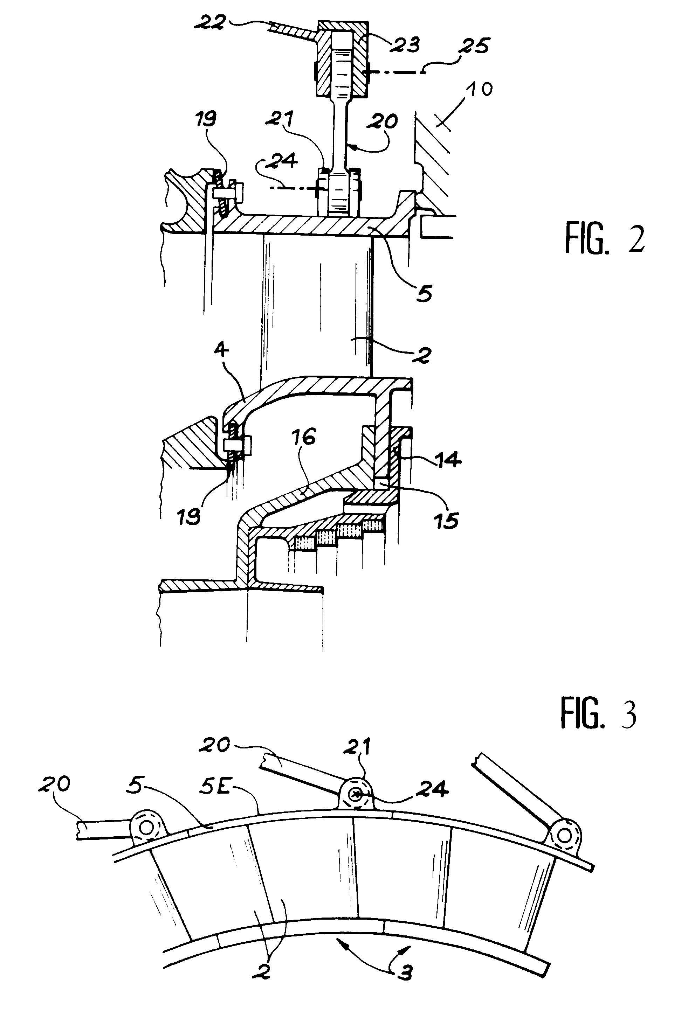

En référence à la figure 2, dans la réalisation envisagée de l'invention, les secteurs 3 sont équipés sur la surface extérieure 5E de leur plate-forme extérieure 5 d'une demi-chape 21. Celle-ci permet à une biellette 20 d'être montée pivotante autour d'un axe 24 parallèle à l'axe de la turbomachine par une première extrémité.

En référence à la figure 3, par sa deuxième extrémité, la biellette 20 est également montée pivotante dans une autre demi-chape constituée d'une bague 23 et d'une pièce de positionnement 22 fixe par rapport au carter du stator, non représenté. Ce pivotement se fait également autour d'un axe 25 parallèle à l'axe 24.

On concoit ainsi que chaque secteur puisse avoir une légère liberté de mouvement dans le sens radial et en rotation autour de l'axe de la turbomachine. Toutefois, les secteurs 3 étant juxtaposés les uns à côté des autres, ils constituent tout de même une couronne monobloc.

Le léger déplacement que peut effectuer chaque secteur est également guidé, comme dans la première réalisation, par une rainure 15 définie par la virole intérieure 14 et le moyeu central 16 du stator.

Sur le côté amont de chaque secteur, on utilise également des joints d'étanchéité 19, de manière analogue à la première réalisation.

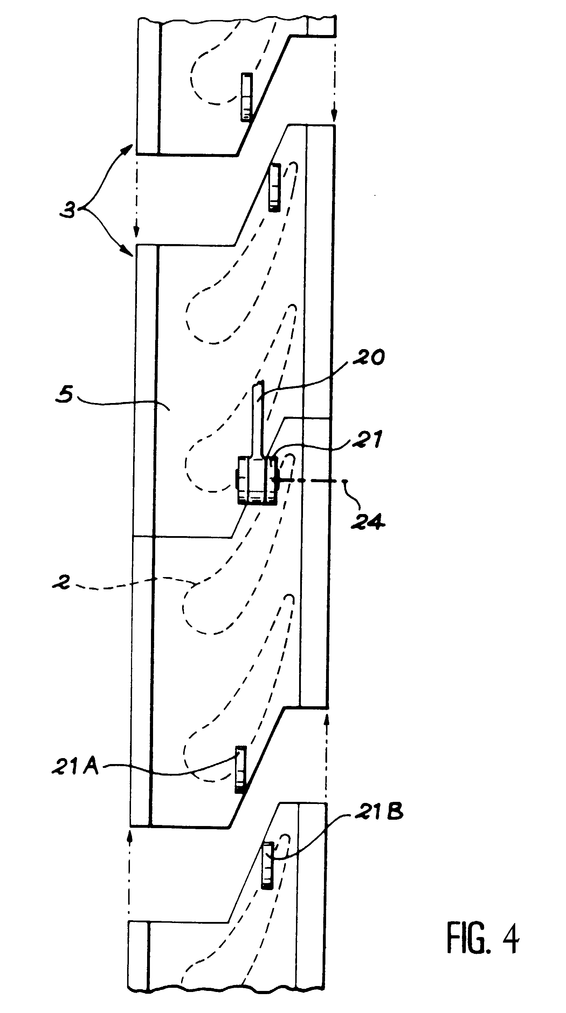

La figure 4 permet de voir en vue de dessus la réalisation précédente. On y distingue une biellette 20 montée dans la première demi-chape 21 fixée sur la plate-forme extérieure 5 d'un secteur. On note que chaque demi-chape 21 est constituée de deux anneaux fixés chacun sur un secteur 5 différent et adjacent. On comprend ainsi que les demi-chapes 21 fixent les secteurs entre eux et sont entraînées en rotation ensemble. Ce mode de fixation permet d'assurer le caractère monobloc du distributeur ainsi constitué en couronne, tout en permettant un léger mouvement radial de chaque secteur.

Ce distributeur s'applique plus particulièrement au stator d'une turbine haute pression d'un turboréacteur.

## Revendications

1. Distributeur d'un stator de turbine de turbomachine comprenant
- des aubes (2) associées entre elles par secteur (3) ;
- des plates-formes intérieures (4) sur chacune desquelles sont fixées au moins deux aubes (2) par une première extrémité ;
- des plates-formes extérieures (5) sur chacune desquelles sont fixées le même nombre d'aubes (2) fixées sur une plate-forme intérieure (4) ; et
- des moyens de maintien des secteurs (3) par rapport à un carter (10) du stator, notamment des moyens de fixation en rotation, des moyens de fixation radiale et des moyens de fixation axiale,
les moyens de fixation radiale souple du distributeur comprenant pour chaque secteur :
- une première demi-chape (21) placée sur la surface extérieure (5E) de la plate-forme extérieure (5) ;
- une deuxième demi-chape (22, 23) montée fixe par rapport au carter du stator ; et
- une biellette (20) montée pivotante dans la première chape (21) par une première extrémité et montée pivotante par rapport au carter (10) dans la deuxième demi-chape (22, 23),
caractérisé en ce que la première demi-chape (21) est constituée de deux anneaux (21A, 21B) solidaires chacun d'un secteur (5) différent, mais adjacents l'un par rapport à l'autre, de manière à assurer le maintien de chaque secteur (5) les uns par rapport aux autres.

## Patentansprüche

1. Leitkranz eines Triebwerkturbinen-Stators, bestehend aus:
- Schaufeln (2), die in Segmenten (3) miteinander verbunden sind,
- Innenplattformen (4), an denen jeweils mindestens zwei Schaufeln (2) mit einem ersten Ende befestigt sind,
- Außenplattformen (5), an denen jeweils die gleiche Anzahl Schaufeln (2) befestigt sind, die an einer Innenplattform (4) befestigt sind, und
- Mitteln für den Halt der Segmente (3) gegenüber einem Statorgehäuse (10), insbesondere Mittel zur Drehbefestigung, Mittel zur radialen Befestigung und Mittel zur axialen Befestigung, wobei die Mittel zur flexiblen radialen Befestigung des Leitkranzes für jedes Segment umfassen:
- ein erstes Gabelgelenk (21), das an der Außenfläche (5E) der Außenplattform (5) angeordnet ist,
- ein zweites Gabelgelenk (22, 23), das zum Statorgehäuse fest angebracht ist, und
- eine Pleuelstange (20), die mit einem ersten Ende schwenkbar in dem ersten Gabelgelenk (21) sitzt und zu dem Gehäuse (10) schwenkbar in dem zweiten Gabelgelenk (22, 23) sitzt,
dadurch gekennzeichnet, daß das erste Gabelgelenk (21) aus zwei Ringen (21A, 21B) besteht, die jeder mit einem anderen Segment (5) fest verbunden sind, aber aneinander angrenzen, so daß der Halt jedes Segments (5) gegenüber dem anderen gewährleistet ist.

## Claims

1. A guide vane ring of a turboengine turbine stator comprising:
vanes (2) associated with one another by way of segments (3);
inner platforms (4) to each of which at least two vanes (2) are secured at a first end;
outer platforms (5) to each of which there are secured vanes (2) to the same number as are secured to an inner platform (4);
means for retaining the segments (3) relative to a stator casing (10), notably rotational, radial and axial retaining means;
the radial retaining means of the guide vane ring being flexible and comprising for each segment:
a first half-clevis (21) disposed on the outer surface (5E) of the outer platform (5);
a second half-clevis (22, 23) which is stationary relative to the stator casing, and
a rod (20) pivotally mounted at one end in the first clevis (21) and so mounted in the second half-clevis (22, 23) as to be pivotable relative to the casing (10),
characterised in that the first half-clevis (21) consists of two rings (21A, 21B), each of which is rigidly secured to a different segment (5) but which are adjacent one another so as to retain each of the segments (5) relative to one another.
